# FASCICULE DE BREVET EUROPEEN

(11) **EP 0 648 314 B1**
(45) Date de publication et mention de la délivrance du brevet: **20.01.1999**
(21) Numéro de dépôt: 94915200.3
(22) Date de dépôt: 02.05.1994
(51) Int. Cl.: F02B 19/06, F01L 7/02

(54) **Procédé et dispositifs de contrôle de combustion d'un moteur quatre temps**
Überwachungsvorrichtung und -verfahren der Verbrennung einer Viertaktbrennkraftmaschine
Method and devices for controlling the combustion of a four-stroke engine

(30) Priorité: 03.05.1993 FR 9305542
(43) Date de publication de la demande: 19.04.1995
(73) Titulaire: Negre, Guy, F-83170 Brignoles (FR)
(72) Inventeur: Negre, Guy, F-83170 Brignoles (FR)
(74) Mandataire: Desaix, Anne
(86) Numéro de dépôt international: FR9400503
(87) Numéro de publication internationale: WO9425743

(56) Documents cités:
- FR-A- 456 673
- FR-A- 811 893
- US-A- 1 973 979
- US-A- 2 091 987
- US-A- 4 981 114
- US-A- 5 074 265

## Description

L'invention concerne un procédé et des dispositifs de controle de la combustion de moteur à combustion interne fonctionnant suivant le cycle à 4 temps à allumage commandé,ou non, à distribution par soupapes ou équipé d'un distributeur rotatif d'admission et/ou d'échappement.

Le rendement thermodynamique de la combustion des moteurs à combustion interne est directement proportionnel a la pression des gaz en fin du temps compression et par voie de conséquence à la charge du moteur, elle même fonction de l'ouverture du papillon d'accélérateur. La consommation spécifique du moteur est liée au rendement thermodynamique, ce qui revient à dire que pour une cylindrée de moteur donnée moins on demande de couple et/ou de puissance plus la consommation spécifique augmente. Cet état de fait est extrêmement pénalisant notamment lorsque le moteur équipe un véhicule automobile car il a pour conséquence qu'à bas régime et faibles charges la consommation de carburant est très importante, par voie de conséquence les émissions polluantes de gaz d'échappement aussi, or, en ville notamment, le moteur est toujours utilisé à bas régime et aux faibles charges. Pour fixer les idées, un moteur d'automobile qui consomme à moyenne ou pleine charge, sur route environ 200 à 250 grammes de carburant par cheval et par heure voit en ville sa consommation s'élever jusqu'à environ 1000 voire 2000 grammes de carburant par cheval et par heure.

Conscients de ce problème, les motoristes ont cherché à améliorer les consommations aux faibles charges de diverses manières : soit en réalisant des moteurs à mélange pauvre ou très pauvre (cas des moteurs à charge stratifiée) ; soit en cherchant à réaliser des moteurs à rapport volumétrique variable pour tenter d'augmenter la pression en fin de compression ; soit encore en "débrayant" un ou plusieurs cylindres afin d'augmenter la charge sur les cylindres restants en fonctionnement, pour une puissance équivalente. Il est également connu du brevet FR 811893 d'allumer un mélange pauvre en carburant d'un cylindre principal à partir d'un petit cylindre supplémentaire en liaison directe avec le cylindre principal.

Ces solutions présentent l'inconvénient de ne résoudre que très partiellement le problème et sont en outre dans certains cas particulièrement difficiles et onéreuses à mettre en oeuvre.

Le procédé selon la revendication 1 suivant l'invention permet au moteur de fonctionner aux faibles charges avec des rendements de combustion équivalents à ceux obtenus à moyenne ou pleine charge. L'invention concerne également des dispositifs selon la revendication 6 pour la mise en oeuvre de ce procédé.

Lors du fonctionnement du moteur à 4 temps les gaz d'admission, après avoir été aspirés dans le cylindre par le piston sont comprimés dans la chambre de combustion pour y être enflammés par la bougie d'allumage, augmenter ainsi de volume et repousser le piston réalisant ainsi le temps moteur également appelé détente ou combustion. Dans la pratique, le volume de la chambre de combustion représente sensiblement entre 9 et 12 pourcents du volume du cylindre suivant le rapport volumétrique choisi. Le procédé suivant l'invention est caractérisé par l'adjonction à cet ensemble d'une petite chambre de combustion secondaire entièrement séparée de la chambre principale et alimentée indépendamment et séparément en gaz d'admission comprimés. Lors du fonctionnement à moyenne charge ou à pleine charge, les gaz comprimés dans cette petite chambre secondaire sont enflammés par une bougie d'allumage, alors que peu avant ou sensiblement après le début de cette combustion, cette petite chambre de combustion secondaire est mise en communication par l'ouverture d'un (ou plusieurs) canal de liaison avec la chambre de combustion principale où la combustion des gaz en provenance de la chambre secondaire va alors enflammer (en lieu et place de la bougie) les gaz d'admission comprimés dans la chambre de combustion principale, l'efficacité de cet allumage par "jet de flammes" issues de la combustion de la chambre secondaire permet en outre d'utiliser dans la chambre principale des mélanges air carburant très pauvres ainsi que des taux de compression élevés gages d'une consommation de carburant faible.

Lors du fonctionnement du moteur aux faibles charges, le cylindre et la chambre de combustion principale ne sont plus alimentés en carburant, mais en air seul, et le piston est repoussé seulement par la détente des gaz contenus dans la petite chambre de combustion secondaire dans le cylindre principal, a travers le canal de liaison. On comprend aisément que la petite chambre de combustion secondaire fonctionne, elle, en quasi permanence à pleine charge avec un bon rendement thermodynamique, garantissant une faible consommation de carburant.

Durant les temps de combustion (ou détente) et d'échappement, le volume de la petite chambre de combustion secondaire est maintenu sensiblement constant à son petit volume, afin que toute l'efficacité de la détente des gaz durant la combustion serve à repousser le piston moteur du cylindre principal, ainsi que de mieux vider la petite chambre de combustion secondaire durant le temps échappement.

Lors du fonctionnement aux faibles charges lorsque le cylindre principal et la chambre principale ne sont plus alimentés en carburant, il est particulièrement intéressant, durant les temps d'admission et de compression d'ouvrir une vanne dans la chambre de combustion principale mettant cette dernière en communication avec l'atmosphère dans le but d'éviter les efforts de pompage durant l'admission et la contre pression sur le piston durant le temps compression qui absorberaient inutilement de la puissance.

On constate donc que dans le procédé suivant l'invention, on distingue 2 modes de fonctionnement: fonctionnement aux moyenne/pleine charges, fonctionnement aux faibles charges. Les cycles de fonctionnement d'un cylindre de moteur selon le procédé de controle de combustion suivant l'invention sont donc les suivants :
1/ lorsque le moteur est aux moyenne ou pleine charges.
   - aspiration: d'air et de carburant dans le cylindre principal
      d'air et de carburant d'alimentation de la petite chambre de combustion secondaire
   - compression: des mélanges dans les deux chambres de combustion.
   - allumage : inflammation du mélange dans la petite chambre par une bougie
   - ouverture : du/des canal de liaison entre la petite chambre de combustion et la chambre de combustion principale, inflammation du mélange dans la chambre de combustion principale.
   - détente : de l'ensemble des combustions (temps moteur) durant ce cycle le volume de la chambre de combustion secondaire est conservé à sa valeur minimum.
   - échappement : des gaz brulés dans le cylindre moteur et dans la petite chambre de combustion secondaire. Durant ce cycle volume de la chambre de combustion secondaire est également conservé à sa valeur minimum.
2/ Lorsque le moteur est aux faibles charges:
   - aspiration : d'air seul dans le cylindre principal d'air et de carburant destinés à alimenter la chambre secondaire
   - compression: du mélange air carburant dans la chambre secondaire. ouverture de la vanne de mise à l'atmosphère de la chambre principale pour éviter la contre pression sur le piston.
   - inflammation du mélange air carburant dans la cham bre secondaire. fermeture de la vanne de mise à l'atmosphère de la chambre principale. ouverture du canal de liaison entre la chambre secondaire et la chambre principale.
   - détente : des gaz contenus dans la chambre secondaire dans le cylindre principal a travers le canal de liaison, durant ce temps le volume de la chambre secondaire est maintenus à sa valeur minimum.
   - échappement : des gaz de combustion, durant ce cycle, le volume de la chambre secon daire est également maintenu à sa valeur minimum.

La disposition de la petite chambre de combustion secondaire, le mode d'ouverture du(des) canal de liaison entre la petite chambre de combustion secondaire et la chambre de combustion principale, les méthodes d'alimentation et de mise en pression des gaz dans la petite chambre de combustion secondaire, l'ouverture et la fermeture de la vanne de mise à l'atmosphère peuvent utiliser tous moyens appropriés pour obtenir les fonctions requises sans pour autant changer le principe du procédé de l'invention. Le volume de la petite chambre de combustion sera choisi en fonction des caractérisques recherchées lors du fonctionnement aux faibles charges et peut varier de quelques pourcents de celui de la chambre de combustion principale jusqu'à éventuellement l' égaler, sans changer pour autant le principe du procédé de l'invention.

Le procédé suivant l'invention s'applique aux moteurs à combustion interne à quatre temps à allumage commandé ou non à un ou plusieurs cylindres, à distribution par arbre à came et soupapes ou autres, toutefois il apparait que le procédé suivant l'invention trouve une application plus particulièrement aisée à réaliser dans le cas d'un moteur à distribution rotative dans lequel le rotor de distribution servira également a assurer dans sa rotation la liaison cyclée entre la chambre de combustion principale et la chambre de combustion secondaire.

L'invention concerne également plusieurs dispositifs pouvant être mis en oeuvre pour l'application du procédé selon l'invention, notamment dans le cas d'un moteur équipé d'une distribution rotative à canal de transfert latéral unique assurant successivement l'échappement puis l'admission, alors que le corps du distributeur obture la chambre de combustion durant les temps de compression et de détente, caractérisé par l'adjonction, dans un autre plan transversal, d'une petite chambre de combustion secondaire, débouchant sur le distributeur rotatif, et alimentée, par un circuit d'admission indépendant en mélange air carburant comprimé par un petit piston lui même commandé par une came, permettant lors du fonctionnement du moteur d'aspirer par le circuit d'admission indépendant de celui du cylindre principal un mélange air carburant, de le comprimer dans le petit volume de la chambre de combustion secondaire, et de maintenir sensiblement constant le petit volume de cette chambre de combustion alors que dans le cycle, et après avoir enflammé a l'aide d'une bougie d'allumage, le mélange dans la chambre de combustion secondaire, le distributeur rotatif dans lequel sont percé un (plusieurs) canal de liaison, va dans sa rotation, à travers ce (ces) canal de liaison mettre en communication les deux chambres afin que d'une part, dans les fonctionnements aux faibles charges, les gaz brulés dans la chambre secondaire se détentent dans la chambre principale qui dans ce cas de fonctionnement n'est alimentée qu'en air (sans carburant) repoussant ainsi le piston qui assure le temps moteur, et que, d'autre part, dans les fonctionnements aux moyenne ou pleine charges, les gaz brulés dans la chambre secondaire viennent enflammer le mélange contenu dans la chambre principale, qui, dans ce cas de fonctionnement est alimentée en mélange air carburant et, permettre la combustion et la détente des gaz contenus à la fois dans la chambre principale et dans la chambre secondaire repoussant le piston et assurant ainsi le temps moteur.

Lors du fonctionnement à faible charge, alors que le cylindre et la chambre de combustion principale ne sont alimentés qu'en air frais sans carburant, une électrovanne va s'ouvrir durant les temps aspiration et compression pour mettre en communication la chambre principale avec l'atmosphère, afin d'éviter les efforts de pompage durant l'aspiration, et la contrepression sur le piston durant le temps compression, et se fermer durant les temps de détente et d'échappement.

Lors du fonctionnement à moyenne et pleine charge, cette électrovanne reste toujours fermée pour permettre le fonctionnement normal du cylindre.

Un moteur équipé selon le procédé et dispositif selon l'invention fonctionne en fait comme un moteur de petite cylindrée lorsqu'on lui demande peu de puissance (donc à pleine charge réelle avec un bon rendement et peu de consommation spécifique) et comme un moteur de grosse cylindrée lorsque l'on a besoin de plus de puissance (donc à moyenne ou pleine charge avec un bon rendement et peu de consommation spécifique).

D'autres buts, avantages et caractéristiques de l'invention apparaîtront à la lecture de la description à titre non limitatif de plusieurs mode de réalisation de l'invention appliquée au controle de la combustion de moteur à quatre temps, faite en regard des dessins annéxés où :
- la figure 1 représente schématiquement, vu en coupe transversale, un moteur 4 temps à allumage commandé à distribution rotative au point mort haut allumage, équipé d'un dispositif de contrôle de la combustion selon le procédé de l'invention, en mode de fonctionnement aux faibles charges.
- la figure 2 représente le même moteur au même moment dans le cycle, en mode de fonctionnement aux moyenne/pleine charges
- la figure 3 représente ce moteur au temps échappement.
- la figure 4 représente ce moteur au temps d'admission en mode de fonctionnement aux faibles charges.
- la figure 5 représente le moteur au temps d'admission en mode de fonctionnement aux moyenne/pleine charges.
- la figure 6 représente le moteur au temps compression en mode de fonctionenement aux faibles charges.
- la figure 7 représente le moteur au temps compression en mode de fonctionnement aux moyenne/pleine charges.
- la figure 8 représente schématiquement vu en coupe transversale, un moteur à distribution rotative 4 temps, équipé d'un dispositif de contrôle de la combustion selon le procédé de l'invention, ou la chambre de combustion principale fonctionne avec des mélanges hétérogènes comme un moteur diésel.
- La figure 9 représente le même moteur alors que la chambre de combustion principale et la petite chambre de combustion secondaire fonctionnent en mélanges hétérogènes
- la figure 10 représente un dispositif suivant le procédé selon l'invention appliquée à un moteur à soupapes.
- la figure 11 représente un dispositif d'obturateur interchambre à boisseau rotatif.

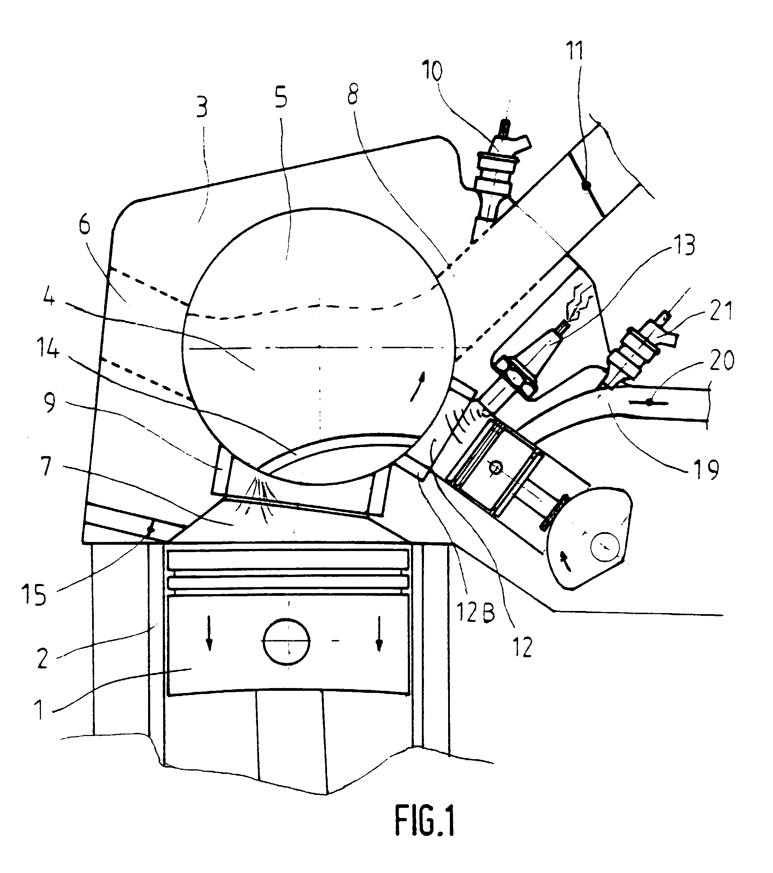

Le moteur représenté schématiquement sur les figures 1 à 7 comporte des éléments bien connus dans les moteurs à distribution rotative, fonctionnant suivant le cycle à 4 temps. Un piston 1, coulissant dans une chemise 2 est coiffé par une culasse 3 dans laquelle est entrainé, à demi-vitesse du moteur, un distributeur rotatif 4, à canal de transfert unique 5, qui lors de sa rotation (sens de la fléche) mettra successivement en communication le conduit d'échappement 6 et la chambre de combustion 7 afin d'assurer le temps échappement, puis ensuite la chambre de combustion 7 avec l'admission 8 assurant ainsi le temps d'admission, le corps du distributeur rotatif 4 obturant la chambre de combustion 7 durant les temps de compression et combustion. l'étanchéité de la chambre étant assurée par l'élément coulissant 9. l'alimentation en carburant de ce cylindre est assurée par l'injecteur 10, et le débit d'air commandant la charge air carburant du cylindre par le papillon 11.

les figures 1 à 9 montrent le moteur aux différentes phases de son fonctionnement, où, pour simplifier la compréhension des dessins, la coupe transversale est décalée au niveau des chambres de combustion 7 et 12, des anneaux d'étanchéités 9 et 12B, et des pistons 1 et 17, et montre ces éléments sur le même plan alors qu'en réalité ils ne sont pas sur le même plan transversal, alors que le conduit d'admission 8, le canal de transfert 5 et le conduit d'échappement 6 représentés en pointillés sont sensiblement sur le même plan que la chambre de combustion principale 7 et son anneau d'étanchéité 9.

La figure 1 représente au point mort haut allumage un moteur à distribution rotative tel que décrit ci-dessus et équipé d'un dispositif permettant l'application du procédé suivant l'invention, en mode de fonctionnement aux faibles charges, vu en coupe transversale (décalée au niveau des cylindres) ou le mélange air carburant comprimé contenu dans la petite chambre de combustion secondaire 12, vient d'être enflammé par la bougie 13 alors que le canal de transfert 14 ménagé dans le distributeur rotatif 4 met en communication la chambre de combustion principale 7 avec la chambre de combustion secondaire 12 et le mélange air carburant enflammé dans cette dernière se détend à travers le canal de transfert 14 dans la chambre principale 7 repoussant le piston 1 et assurant ainsi le temps moteur aux faibles charges; le papillon des gaz alimentant la chambre de combustion principale 7 se trouve fermé ainsi que l'électrovanne 15 de mise à l'atmosphère.

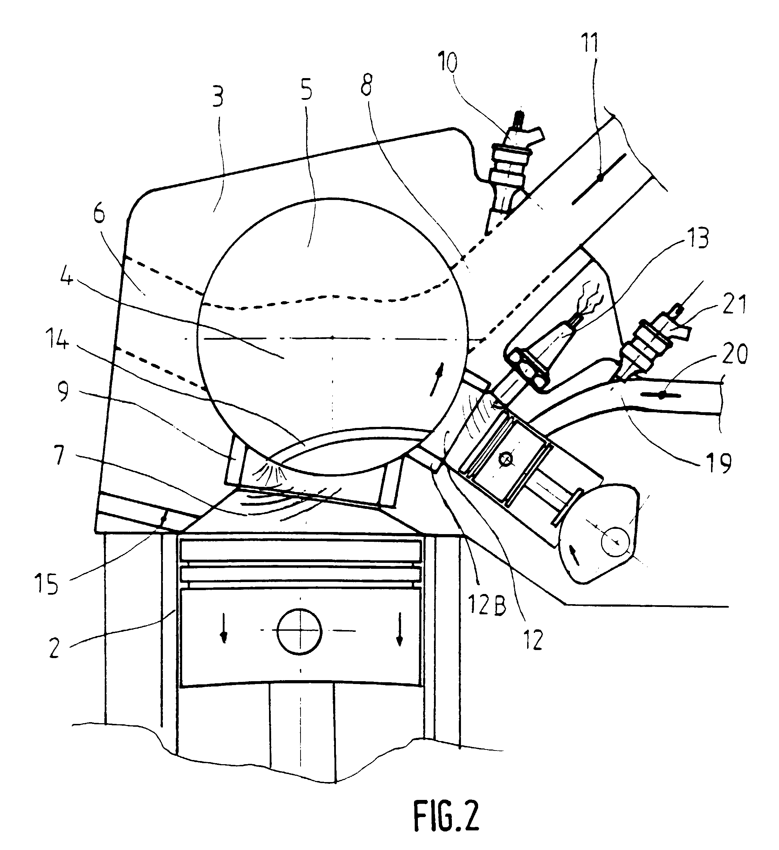

La figure 2 représente le même moteur pareillement équipé au même moment dans le cycle mais alors qu'il fonctionne en mode aux moyenne/pleine charges, le papillon des gaz 11 est alors ouvert et l'injecteur 10 a alimenté la chambre durant le temps d'admission, le "jet de flamme" de la combustion de la chambre secondaire enflamme à son tour le mélange air carburant de la chambre principale et les gaz contenus dans les deux chambres se détendent repoussant le piston assurant ainsi le temps moteur.

On comprend dès lors tous les avantages du procédé ainsi que du dipositif ci-dessus.

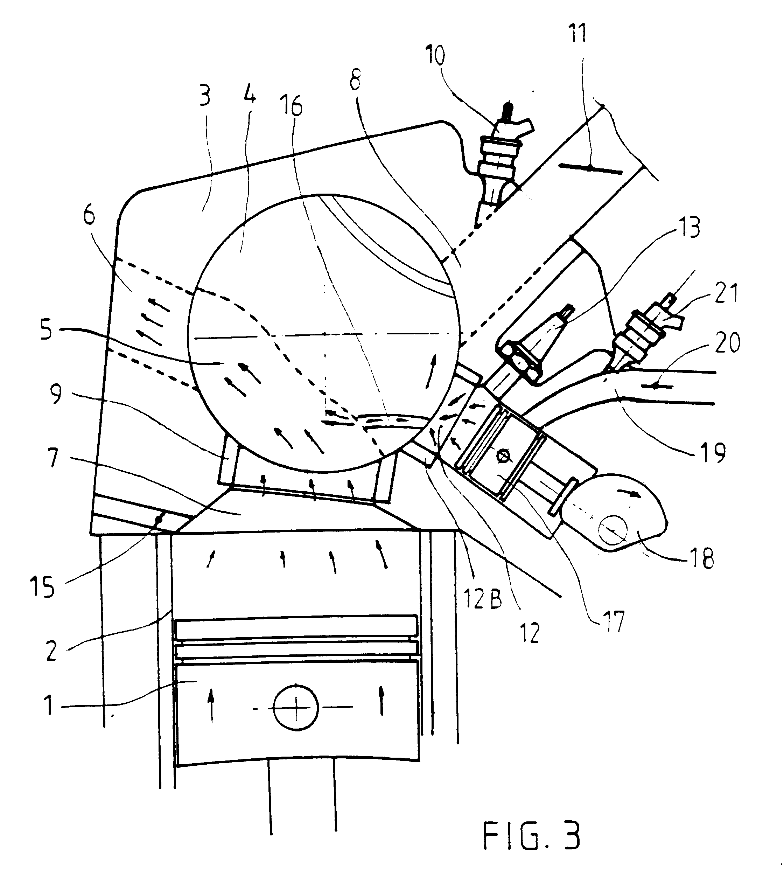

L'échappement s'effectue normalement, Fig 3 par le conduit d'échappement 6 et vide le cylindre, la chambre de combustion 7 ainsi que la chambre de combustion secondaire 12 à travers un orifice ménagé à cet effet 16, le piston secondaire 17 commandé par une came à double effet 18 (ou commande desmodromique) est maintenu sensiblement à son point mort haut pour réduire au maximum le volume à vider durant ce temps; ce temps est commun aux 2 modes de fonctionnement, aux faibles charges, et aux moyenne/pleine charges.

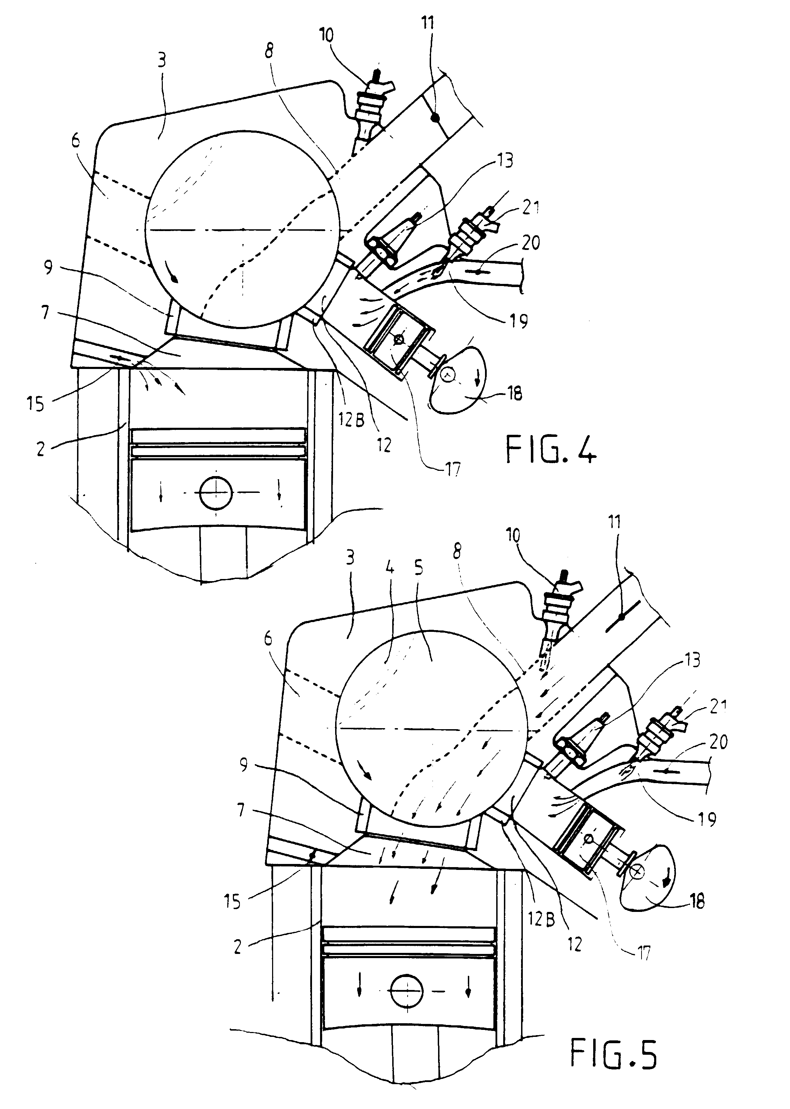

La Fig.4 représente le moteur au temps d'admission en mode de fonctionnement aux faibles charges, le papillon de gaz 11 est fermé, l'injecteur 10 n'est pas actionné, la vanne de mise à l'atmosphère 15 est ouverte pour éviter un frein de pompage lors de la descente du piston 1; le piston secondaire 17 rappelé par la came 18 découvre le circuit d'admission secondaire 19 pour admettre le mélange air carburant dosé par l'injecteur 21, le pilotage fin du moteur s'effectue à l'aide du papillon de gaz secondaire 20.

La Fig.5, représente le moteur au temps d'admission en mode de fonctionnement aux moyenne/pleine charges, le papillon de gaz 11 est ouvert, l'injecteur 10 actionné, et le mélange air carburant est admis dans le cylindre à travers le canal de transfert 5 ménagé dans le distributeur rotatif 4; le piston secondaire 17 rappelé par la came 18 découvre le circuit d'admission secondaire 19 pour admettre le mélange air carburant dosé par l'injecteur 21, le papillon de gaz secondaire 20 est ouvert, et l'électrovanne 15 de mise à l'atmosphère de la chambre de combustion principale 7 est fermée.

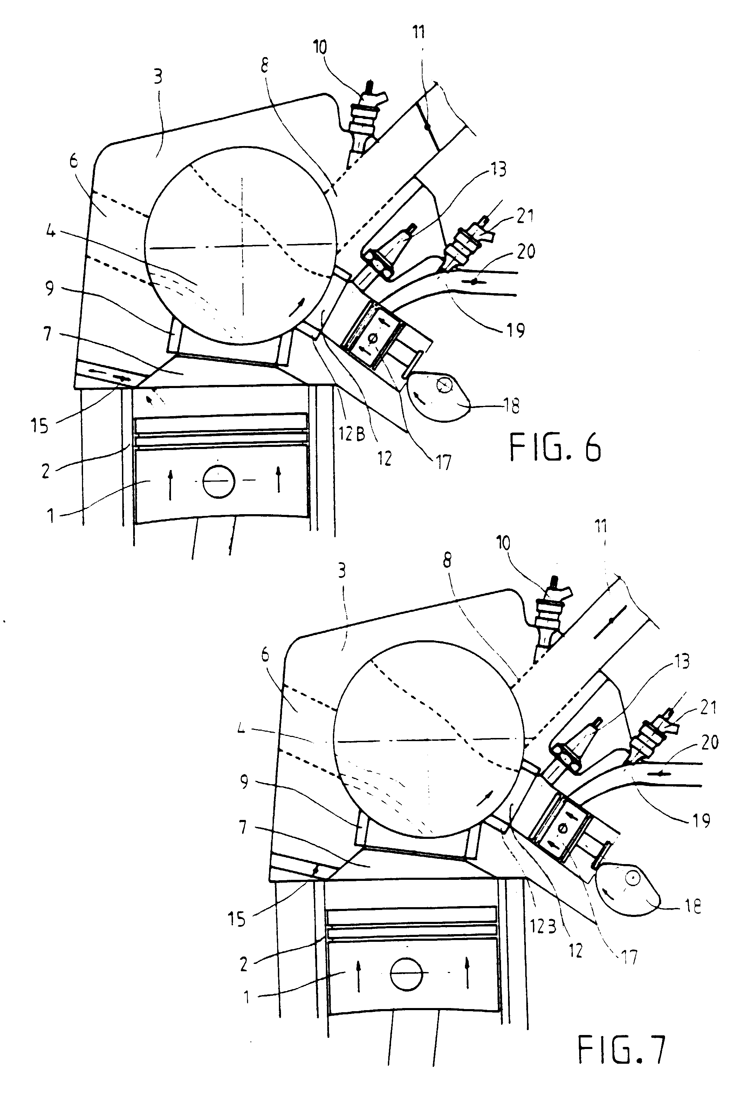

La Fig.6 représente le moteur au temps compression en mode de fonctionnement aux faibles charges, le piston principal 1 effectue sa course ascendante alors que l'électrovanne 15 de mise à l'atmosphère est ouverte afin d'éviter des contre-pressions sur le piston 1; La came 18 repousse le piston secondaire 17 qui vient comprimer le mélange air carburant dans la chambre secondaire 12 obturée par le corps du distributeur rotatif 1, l'étanchéité étant assurée par l'anneau coulissant 12B. En fin de compression on retrouve donc de l'air sans carburant dans la chambre principale 7 et un mélange air carburant comprimé dans la chambre de combustion secondaire 12.

La Fig.7 représente le moteur au temps compression en mode fonctionnement aux moyenne/pleine charges, le piston principal 1 effectue sa course ascendante alors que l'électrovanne 15 de mise à l'atmosphère est fermée, et comprime le mélange air carburant dans la chambre de combustion principale 7, l'étanchéité de la chambre est assurée par l'anneau coulissant 9; La came 18 repousse le piston secondaire 17 qui vient comprimer le mélange air carburant dans la chambre secondaire 12 obturée par le corps du distributeur rotatif 1, l'étanchéité étant assurée par l'anneau coulissant 12B. On retrouve en fin de compression des mélanges air carburant dans la chambre principale 1 et dans la chambre secondaire 12.

Le cycle en mode de fonctionnement aux faibles charges recommence par l'allumage et la détente tel que décrit Fig.1

Le cycle en mode de fonctionnement aux moyenne/pleine charges recommence par l'allumage et la détente tel que décrit Fig. 2.

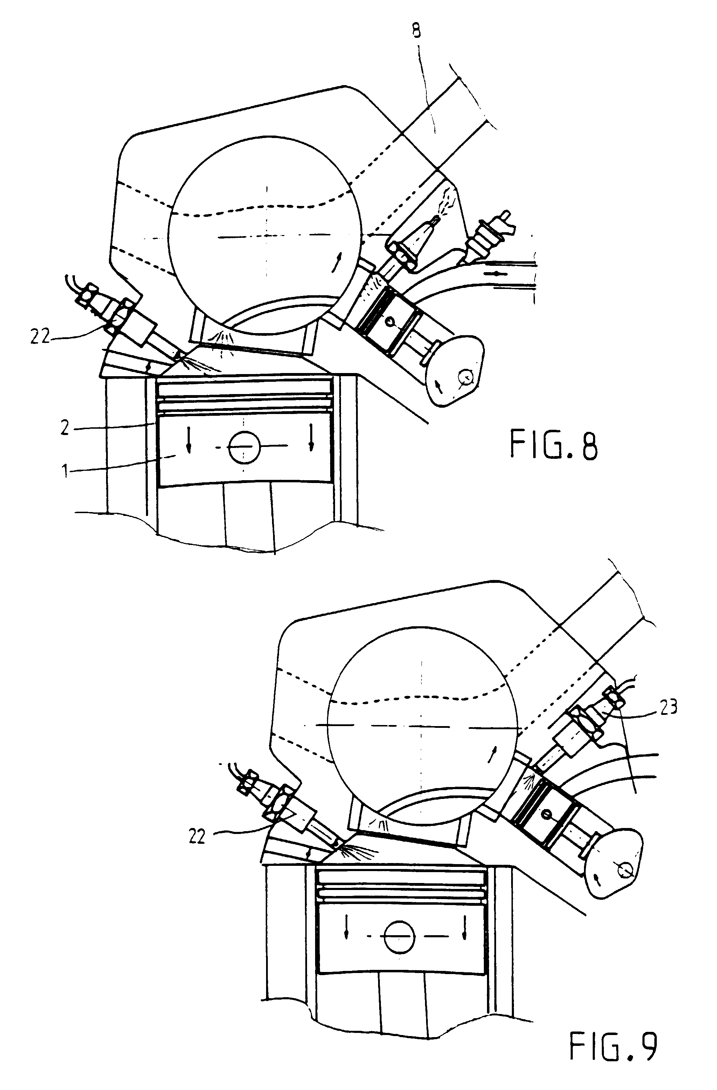

Le procédé et les dispositifs suivant l'invention s'appliquent également dans le cas des moteurs fonctionnant avec des mélanges hétérogènes, à auto-inflammation plus habituellement appelés moteur "diesel", fonctionnant avec du gazole ou autres carburants lourds, deux cas peuvent être réalisés, soit un procédé mixte ou la petite chambre de combustion fonctionne avec un allumage commandé par bougie, alors que le cylindre principal est alimenté en gazole et fonctionne en mélange hétérogène, le départ de combustion étant controlé par l'ouverture du canal de liaison 14. La Fig.8 montre un moteur ainsi équipé, vu en coupe transversale (décalée) ou un injecteur de carburant direct 22 a été implanté dans la chambre de combustion principale 7.

Soit un procédé entièrement à mélange hétérogène ou la petite chambre de combustion secondaire fonctionne elle aussi comme un moteur diesel; la Fig.9 montre un moteur ainsi équipé, vu en coupe transversale où un injecteur de carburant 23 a été implanté dans la chambre de combustion secondaire 12.

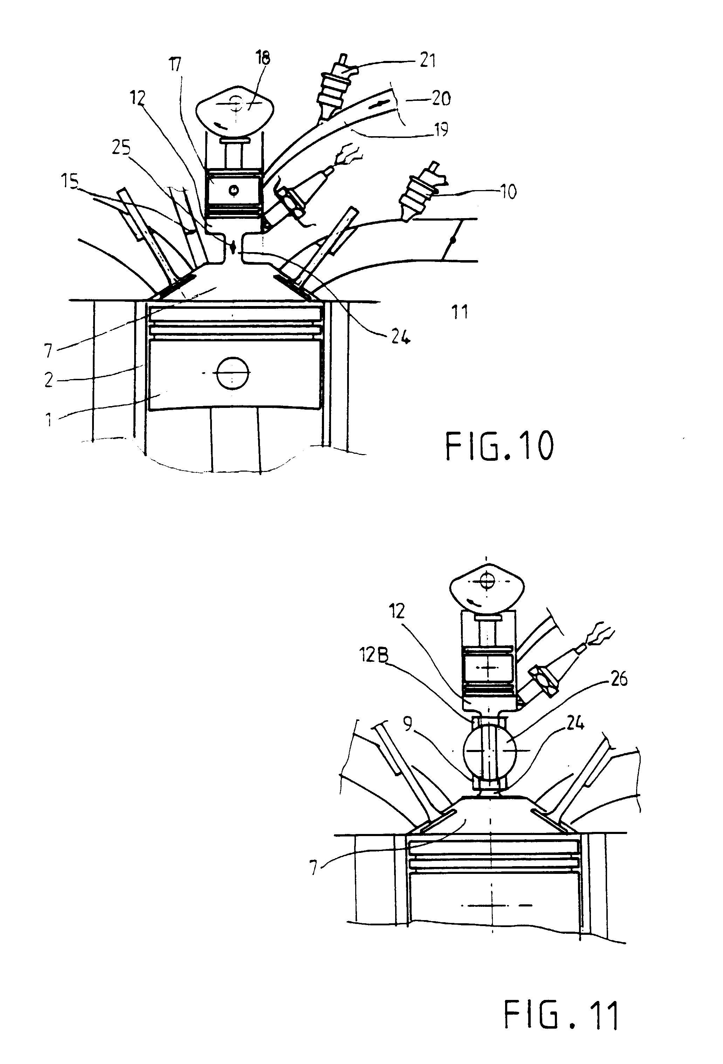

La Fig.10 représente un dispositif suivant le procédé selon l'invention appliqué à un moteur à distribution par soupapes, un canal de transfert 24 est ménagé dans la partie haute de la chambre de combustion principale qu'il relie à une petite chambre de combustion secondaire 12, alimentée en mélange air carburant comprimé par un piston 17, et un circuit d'admission secondaire constitué par un conduit 19, un injecteur 21 et un papillon de gaz 20; Le piston secondaire est commandé par une came à double effet 18. Un obturateur 25, positionné dans le canal de transfert 24 et mettra en communication par son ouverture cyclée la petite chambre de combustion secondaire 12 et la chambre de combustion principale 7. Les modes de fonctionnement aux faibles charges et aux moyenne/pleine charges et le déroulement des cycles sont les mêmes que décrit précédemment.

La Fig. 11 représente, dans un moteur à soupapes équipé selon le procédé de l'invention un dispositif d'obturateur du canal de transfert 24 utilisant un distributeur rotatif 26 comportant un conduit de transfert 27 le traversant, alors que l'étanchéité de la chambre de combustion principale 7 est assurée par un anneau coulissant 9 et que l'étanchéité de la petite chambre de combustion secondaire 12 est assurée par un anneau coulissant 12B, ce distributeur rotatif 26 est entraîné au 1/4 de la vitesse du vilebrequin si les anneaux d'étanchéité 9 et 12B sont sur le même plan transversal ou a demi vitesse si les anneaux 9 et 12B sont sur un plan différent et va mettre en communication les deux chambres de combustion sensiblement au point mort haut allumage pour permettre le fonctionnement suivant le procédé selon l'invention.

## Revendications

1. Procédé de contrôle de la combustion d'un moteur à quatre temps à allumage commandé ou non, à distribution par soupapes ou à distribution rotative comportant pour chaque cylindre une chambre de combustion dans laquelle le mélange air-carburant après avoir été aspiré par le piston, est comprimé par ce dernier pour y être enflammé, augmenter ainsi de volume et repousser le piston réalisant ainsi le temps moteur une chambre de combustion secondaire étant adjointe à la chambre principale pour allumer un mélange d'air et de carburant admis dans la chambre principale par le jet de flamme en provenance de la chambre secondaire, caractérisé :
- en ce que la chambre de combustion secondaire est entièrement séparée et sans liaison directe permanente avec la chambre de combustion principale, est alimentée indépendamment et séparément en mélange air-carburant comprimé, et fonctionne suivant un cycle différent et dépendant de la chambre principale,
- en ce que lors du fonctionnement, à la suite des temps admission et compression, peu avant ou sensiblement après avoir enflammé le mélange dans la petite chambre de combustion secondaire, au moins un canal de liaison est ouvert entre la chambre de combustion principale et la chambre de combustion secondaire,
- en ce que la détente des gaz contenus dans la chambre de combustion secondaire s'effectue dans la chambre de combustion principale à travers au moins un canal de liaison, le volume de la petite chambre de combustion secondaire est maintenu sensiblement constant à son petit volume, afin que toute l'efficacité de la détente des gaz durant la combustion serve à repousser le piston moteur du cylindre principal,
- en ce que de l'air sans carburant est admis dans le cylindre principal lorsque l'on demande peu de puissance au moteur et que le temps moteur est alors seulement assuré par la détente des gaz contenus dans la petite chambre de combustion secondaire alors que pour le fonctionnement aux moyennes et fortes charges, lorsque l'on demande une plus grande puissance au moteur, l'on admet dans le cylindre principal un mélange d'air et de carburant qui sera allumé par le "jet de flamme" en provenance de la chambre secondaire.

2. Procédé de contrôle de la combustion d'un moteur à quatre temps selon la revendication 1 durant les temps de combustion ou détente et échappement, caractérisé en ce que le volume de la petite chambre de combustion secondaire est maintenu sensiblement constant à son petit volume afin de mieux vider la petite chambre de combustion secondaire durant le temps échappement.

3. Procédé de contrôle de la combustion d'un moteur à quatre temps selon la revendication 1 ou 2, caractérisé en ce que lors du fonctionnement, en mode aux faibles charges, alors que le cylindre principal est alimenté en air seul, durant les temps admission et compression, il est ouvert une vanne de mise à l'atmosphère de la chambre principale afin d'éviter les efforts de pompage à l'admission et les contre-pressions sur le piston durant le temps compression.

4. Procédé de contrôle de la combustion suivant les revendications 1 à 3, caractérisé en ce que la chambre secondaire est alimentée avec des mélanges air-carburant hétérogènes, comme un moteur diesel.

5. Procédé de contrôle de la combustion suivant les revendications 1 à 3, caractérisé en ce que le cylindre principal fonctionne avec des mélanges air carburant hétérogènes, comme un moteur diesel, le départ de la combustion étant alors contrôlé par l'ouverture du canal de liaison, la chambre de combustion secondaire pouvant dans ce cas soit être alimentée par des mélanges homogènes à allumage commandé, soit selon la revendication 4 par des mélanges hétérogènes comme un moteur diesel.

6. Dispositif pour la mise en oeuvre du procédé suivant les revendications 1 à 3, dans un moteur à distribution rotative comportant, positionné sur l'ensemble chemise piston (2) (1), chambre de combustion (7) et anneau d'étanchéité (9), un distributeur rotatif (4), à canal de transfert latéral unique (5) qui lors de sa rotation met successivement en communication le conduit d'échappement (6) et la chambre de combustion (7), puis la chambre de combustion (7) avec le conduit d'admission (8), caractérisé par l'adjonction, dans un autre plan transversal, d'une petite chambre de combustion secondaire (12) débouchant sur le distributeur rotatif (4), rendue étanche par un anneau coulissant (12B) et alimentée par un circuit d'admission indépendant, conduit d'air (19), injecteur (21), papillon de gaz (20), en mélange air-carburant comprimé par un piston (17), dans laquelle le mélange air carburant est enflammé par une bougie (13), en fin de compression alors que dans sa rotation, le distributeur rotatif (4) dans lequel est ménagé un canal de liaison (14) va mettre en communication, peu avant ou sensiblement après avoir enflammé le mélange, la chambre de combustion secondaire (12) et la chambre de combustion principale (7), qui en mode de fonctionnement aux faibles charges, est alimentée en air seul et le mélange air carburant enflammé dans la chambre secondaire (12) va se détendre dans la chambre de combustion principale (7) repoussant le piston (1) et assurant ainsi le temps moteur, la détente des gaz contenus dans la chambre de combustion secondaire s'effectuant dans la chambre de combustion principale à travers le canal de liaison, alors qu'en mode de fonctionnement aux moyenne / pleine charges, la chambre de combustion principale (7) est alimentée en mélange air carburant, et le "jet de flammes" en provenance de la chambre de combustion secondaire (12) à travers le canal de liaison (14) va enflammer à son tour le mélange air carburant de la chambre principale où les gaz en combustion des deux chambres vont se détendre repoussant ainsi le piston et assurant le temps moteur.

7. Dispositif selon la revendication 6, caractérisé par une commande à came desmodromique à double effet (18), du piston (17) comprimant le mélange air carburant dans la chambre de combustion secondaire (12) où le point mort haut dudit piston (17) sera maintenu durant les temps de combustion détente et d'échappement afin d'une part de ne pas chuter inutilement la pression des gaz en détente pour que toute l'efficacité de la détente serve à repousser le piston moteur (1) du cylindre principal, et d'autre part de vider au mieux la chambre de combustion secondaire (12) à travers un orifice (16) ménagé à cet effet dans le distributeur rotatif (4), ladite came (18) permettant ensuite, durant le temps d'admission, d'amener le piston (17) commandant l'alimentation de la chambre secondaire (12), à son point mort bas pour permettre l'admission du mélange air carburant, et de repousser ce même piston (17) vers son point mort haut, durant le temps compression pour comprimer le mélange air-carburant dans la chambre de combustion secondaire (12) où il sera enflammé par la bougie (13).

8. Dispositif suivant la revendication 6, caractérisé par l'utilisation d'une électrovanne (15) gérée électroniquement, et permettant la mise à l'atmosphère de la chambre principale (7) lors du fonctionnement aux faibles charges quand le cylindre principal alimentant la chambre de combustion principale (7) est seulement alimenté par de l'air sans carburant, durant les temps d'admission afin d'éviter les efforts de pompage, et de compression afin d'éviter la contre pression sur le piston (1), l'électrovanne restant fermée dès que le cylindre principal et la chambre de combustion principale (7) sont alimentés en mélange air carburant, pour permettre le fonctionnement normal de ce cylindre.

9. Dispositif selon la revendication 6 où la chambre secondaire (12) est alimentée par des mélanges air carburant hétérogènes comme sur les moteurs diesel, caractérisé par l'implantation dans la chambre secondaire d'un injecteur (22) direct tel que sur les moteurs diesel.

10. Dispositif selon la revendication 6, où le cylindre principal et la chambre de combustion principale (7) sont alimentés par des mélanges hétérogènes comme sur les moteurs diesel, caractérisé par l'implantation dans la chambre principale d'un injecteur (23) direct et d'un circuit de carburant sous pression tel que sur les moteurs diesel.

11. Dispositif selon la revendication 6, dans un moteur à distribution par soupapes comportant positionnée sur l'ensemble chemise piston (2) (1) une chambre de combustion dans laquelle débouchent des conduits d'admission et d'échappement obturés par des soupapes, caractérisé par un canal de liaison ou de transfert (24) implanté au sommet de cette chambre qu'il relie à une petite chambre de combustion secondaire (12), alimentée en mélange air carburant comprimé par un piston (17) et un circuit d'admission secondaire constitué par un conduit d'air, un injecteur et un papillon de gaz (19), (21), (20). Le piston secondaire (17) est commandé par une came à double effet (18). Un obturateur (25) est positionné dans le canal de transfert (24) et mettra en communication par son ouverture cyclée, la petite chambre de combustion secondaire (12) et la chambre de combustion principale (7), les cycles et les modes de fonctionnement aux faibles charges ou aux moyenne / pleine charges étant les mêmes que décrit dans les revendications 1 à 10.

12. Dispositif selon la revendication 11, caractérisé par l'utilisation d'un distributeur rotatif (26) pour permettre l'obturation et l'ouverture cyclée du canal de transfert (24) entre la chambre de combustion principale (7) et la petite chambre de combustion secondaire (12), l'étanchéité des chambres de combustion (7), (12) étant assurée par des anneaux coulissants (9), (12B), et le distributeur rotatif, dans lequel est ménagé un conduit de transfert (27), étant entraîné par le vilebrequin du moteur, soit au quart de la vitesse du vilebrequin si les anneaux d'étanchéité sont dans le même plan transversal, le conduit de transfert (27) fonctionnant ainsi dans les deux sens, soit à demi vitesse du vilebrequin si les anneaux d'étanchéité sont sur un plan transversal différent, le conduit de transfert (27) fonctionnant ainsi toujours dans le même sens.

## Patentansprüche

1. Verfahren zur Steuerung der Verbrennung in einem Viertaktmotor mit gesteuerter oder nicht gesteuerter Zündung, mit Ventilsteuerung oder Drehschiebersteuerung, für jeden Zylinder umfassend: einen Brennraum, in dem das Kraftstoff-Luftgemisch, nachdem es vom Kolben angesaugt wurde, von diesem verdichtet wird, um dort entzündet zu werden, so sein Volumen zu vergrößern und den Kolben zurückzutreiben, um so den Arbeitshub auszuführen, einen Nebenbrennraum, der dem Hauptbrennraum zugeordnet ist, um ein Gemisch aus Luft und Kraftstoff, das in den Hauptbrennraum eingelassen wurde, durch die Stichflamme zu entzünden, die aus dem Nebenbrennraum stammt, dadurch gekennzeichnet,
- daß der Nebenbrennraum vollständig getrennt und ohne direkte, dauernde Verbindung mit dem Hauptbrennraum ist, unabhängig und separat mit verdichtetem Kraftstoff-Luftgemisch geladen wird und in einem anderen und vom Hauptbrennraum abhängigen Arbeitsspiel arbeitet,
- daß im Betrieb auf den Einlaß- und den Verdichtungshub folgend, kurz vor oder erheblich nach der Zündung des Gemischs im kleinen Nebenbrennraum mindestens ein Verbindungskanal zwischen dem Hauptbrennraum und dem Nebenbrennraum geöffnet wird,
- daß die Entspannung der im Nebenbrennraum enthaltenen Gase durch mindestens einen Verbindungskanal in den Hauptbrennraum erfolgt, wobei das Volumen des kleinen Nebenbrennraums im wesentlichen konstant auf seinem kleinen Volumen gehalten wird, damit die ganze Wirkung der Entspannung der Gase während der Verbrennung dazu dient, den Arbeitskolben des Hauptzylinders zurückzutreiben,
- daß Luft ohne Kraftstoff in den Hauptzylinder eingelassen wird, wenn vom Motor geringe Leistung verlangt wird, und daß der Arbeitshub dann nur durch die Entspannung der Gase sichergestellt wird, die im kleinen Nebenbrennraum enthalten sind, während für den Betrieb unter mittlerer oder starker Last, wenn vom Motor eine größere Leistung verlangt wird, in den Hauptzylinder ein Gemisch aus Luft und Kraftstoff eingelassen wird, welches durch die "Stichflamme" entzündet wird, die aus dem Nebenbrennraum stammt.

2. Verfahren zur Steuerung der Verbrennung in einem Viertaktmotor nach Anspruch 1 während des Verbrennungs- oder Entspannungshubs und des Ausschubhubs, dadurch gekennzeichnet, daß das Volumen des kleinen Nebenbrennraums im wesentlichen konstant auf seinem kleinen Volumen gehalten wird, um den kleinen Nebenbrennraum während des Ausschubhubs besser zu leeren.

3. Verfahren zur Steuerung der Verbrennung in einem Viertaktmotor nach Anspruch 1 oder 2, dadurch gekennzeichnet, daß im Betrieb in der Betriebsart für geringe Last, wenn der Hauptzylinder nur mit Luft geladen wird, während des Einlaß- und des Verdichtungshubs ein Entlüftungsventil im Hauptbrennraum geöffnet wird, um die Pumparbeit beim Einlaß und den Gegendruck auf den Kolben während des Verdichtungshubs zu vermeiden.

4. Verfahren zur Steuerung der Verbrennung nach den Ansprüchen 1 bis 3, dadurch gekennzeichnet, daß der Nebenbrennraum mit heterogenen Kraftstoff-Luftgemischen geladen wird, wie ein Dieselmotor.

5. Verfahren zur Steuerung der Verbrennung nach den Ansprüchen 1 bis 3, dadurch gekennzeichnet, daß der Hauptzylinder mit heterogenen Kraftstoff-Luftgemischen arbeitet, wie ein Dieselmotor, wobei der Beginn der Verbrennung dann durch die Öffnung des Verbindungskanals gesteuert wird, wobei der Nebenbrennraum in diesem Fall entweder mit homogenen Gemischen bei gesteuerter Zündung geladen werden kann, oder nach Anspruch 4 mit heterogenen Gemischen, wie ein Dieselmotor.

6. Vorrichtung zur Durchführung des Verfahrens nach den Ansprüchen 1 bis 3 in einem Motor mit Drehschiebersteuerung, die auf der Einheit Zylinder / Kolben (2) (1) angeordnet aufweist: Brennraum (7) und Dichtungsring (9), einen Drehschieber (4) mit nur einem seitlichen Übertragungskanal (5), der während der Rotation nacheinander den Auslaßkanal (6) mit dem Brennraum (7) verbindet, dann den Brennraum (7) mit dem Einlaßkanal (8), gekennzeichnet durch einen kleinen Nebenbrennraum (12) in einer anderen Querebene, der in den Drehschieber (4) mündet und durch einen Gleitring (12B) abgedichtet und über einen unabhängigen Einlaßkreislauf, Luftkanal (19), Einspritzdüse (21), Drosselklappe (20), mit durch einen Kolben (17) verdichtetem Kraftstoff-Luftgemisch geladen wird, in dem das Kraftstoff-Luftgemisch durch eine Zündkerze (13) am Ende der Verdichtung entzündet wird, während der Drehschieber (4), in dem ein Verbindungskanal (14) ausgebildet ist, bei seiner Rotation geringfügig vor oder erheblich nach der Zündung des Gemischs den Nebenbrennraum (12) mit dem Hauptbrennraum (7) verbindet, der in der Betriebsart für geringe Last nur mit Luft geladen wird, und sich das im Nebenbrennraum (12) entzündete Kraftstoff-Luftgemisch in den Hauptbrennraum (7) entspannt, wobei es den Kolben (1) zurücktreibt und so für den Arbeitshub sorgt, wobei die Entspannung der im Nebenbrennraum enthaltenen Gase durch den Verbindungskanal in den Hauptbrennraum erfolgt, während der Hauptbrennraum (7) in der Betriebsart für mittlere / Vollast mit Kraftstoff-Luftgemisch geladen wird und die "Stichflamme" aus dem Nebenbrennraum (12) durch den Verbindungskanal (14) ihrerseits das Kraftstoff-Luftgemisch des Hauptbrennraums entzündet, wo sich die verbrennenden Gase der beiden Brennräume entspannen und so den Kolben zurücktreiben und den Arbeitshub ausführen.

7. Vorrichtung nach Anspruch 6, gekennzeichnet durch eine Steuerung des Kolbens (17), der das Kraftstoff-Luftgemisch im Nebenbrennraum (12) verdichtet, durch einen doppeltwirkenden desmodromischen Nocken (18), bei dem der obere Totpunkt (17) während des Verbrennungs-, des Entspannungs- und des Ausschubhubs aufrechterhalten wird, um einerseits nicht unnötig den Druck der sich entspannenden Gase zu senken, damit die gesamte Wirkung der Entspannung dazu dient, den Arbeitskolben (1) des Hauptzylinders zurückzutreiben, und andererseits den Nebenbrennraum (12) bestmöglich durch eine Öffnung (16) zu leeren, die zu diesem Zweck im Drehschieber (4) vorgesehen ist, wobei dieser Nocken (18) danach, während des Einlaßhubs, ermöglicht, den Kolben (17), der die Ladung des Nebenbrennraums (12) ausführt, in seinen unteren Totpunkt zu bringen, um den Einlaß des Kraftstoff-Luftgemischs zu ermöglichen, und diesen Kolben (17) während des Verdichtungshubs in seinen oberen Totpunkt zu bringen, um das Kraftstoff-Luftgemisch im Nebenbrennraum (12) zu verdichten, wo es durch die Zündkerze (13) entzündet wird.

8. Vorrichtung nach Anspruch 6, gekennzeichnet durch ein elektronisch gesteuertes Magnetventil (15), das die Entlüftung des Hauptbrennraums (7) im Betrieb für geringe Last, wenn der den Hauptbrennraum (7) ladende Hauptzylinder nur mit Luft ohne Kraftstoff geladen wird, während des Einlaßhubs ermöglicht, um die Pumparbeit zu vermeiden, und während des Verdichtungshubs, um den Gegendruck auf den Kolben (1) zu vermeiden, während das Magnetventil geschlossen bleibt, sobald der Hauptzylinder und der Hauptbrennraum (7) mit Kraftstoff-Luftgemisch geladen werden, um den normalen Betrieb dieses Zylinders zu ermöglichen.

9. Vorrichtung nach Anspruch 6, bei der der Nebenbrennraum (12) mit heterogenen Kraftstoff-Luftgemischen geladen wird, wie bei Dieselmotoren, dadurch gekennzeichnet, daß eine Direkteinspritzdüse (22), wie bei Dieselmotoren, in den Nebenbrennraum eingesetzt ist.

10. Vorrichtung nach Anspruch 6, bei der der Hauptzylinder und der Hauptbrennraum (7) mit heterogenen Kraftstoff-Luftgemischen geladen werden, wie bei Dieselmotoren, gekennzeichnet durch eine in den Hauptbrennraum eingesetzte Direkteinspritzdüse (23) und einen Druckkraftstoffkreislauf, wie bei Dieselmotoren.

11. Vorrichtung nach Anspruch 6 in einem Motor mit Ventilsteuerung, die auf der Einheit Zylinder / Kolben (2) (1) angeordnet einen Brennraum aufweist, in den durch Ventile verschlossene Einlaß- und Auslaßkanäle münden, gekennzeichnet durch einen Verbindungs- oder Übertragungskanal (24), der im Scheitelpunkt dieses Brennraums angeordnet ist und diesen mit einem kleinen Nebenbrennraum (12) verbindet, der mit durch einen Kolben (17) verdichtetem Kraftstoff-Luftgemisch geladen wird, und einen zweiten Einlaßkreislauf, bestehend aus einem Luftkanal, einer Einspritzdüse und einer Drosselklappe (19), (21), (20), wobei der zweite Kolben (17) durch einen doppeltwirkenden Nocken (18) betätigt wird, wobei ein Verschlußteil (25) im Übertragungskanal (24) angeordnet ist und durch seine periodische Öffnung den kleinen Nebenbrennraum (12) mit dem Hauptbrennraum (7) verbindet, wobei Arbeitsspiele und Betriebsarten bei geringer Last oder bei mittlerer / Vollast dieselben sind, wie die in den Ansprüchen 1 bis 10 beschriebenen.

12. Vorrichtung nach Anspruch 11, gekennzeichnet durch die Verwendung eines Drehschiebers (26), um periodischen Verschluß und Öffnung des Übertragungskanals (24) zwischen dem Hauptbrennraum (7) und dem kleinen Nebenbrennraum (12) zu ermöglichen, wobei die Abdichtung der Brennräume (7), (12) durch Gleitringe (9), (12B) erfolgt und der Drehschieber, in dem ein Übertragungskanal (27) angeordnet ist, durch die Kurbelwelle des Motors angetrieben wird, entweder mit einem Viertel der Kurbelwellengeschwindigkeit, wenn sich die Dichtungsringe in derselben Querebene befinden, wobei der Übertragungskanal (27) dann in beiden Richtungen arbeitet, oder mit der Hälfte der Kurbelwellengeschwindigkeit, wenn die Dichtungsringe sich in einer anderen Querebene befinden, wobei der Übertragungskanal (27) dann immer in derselben Richtung arbeitet.

## Claims

1. Method for controlling combustion in a four-stroke engine which may or may not be a controlled-ignition engine, which has valve timing or rotary timing and comprises, for each cylinder, a combustion chamber in which the air/fuel mixture, having been drawn in by the piston, is compressed by the latter in order to be ignited therein, thus increase in volume and push back the piston thus producing the power stroke, there being a secondary combustion chamber in addition to the main chamber for igniting a mixture of air and of fuel let into the main chamber using the jet of flame issuing from the secondary chamber, characterized:
- in that the secondary combustion chamber is entirely separate from and has no permanent direct link with the main combustion chamber, is fed independently and separately with compressed air/fuel mixture and operates on a cycle different from and dependent on the main chamber,
- in that during operation, following the induction and compression strokes, not much before or appreciably after the mixture in the small secondary combustion chamber has been ignited, at least one connecting port between the main combustion chamber and the secondary combustion chamber is opened,
- in that the expansion of the gases contained in the secondary combustion chamber takes place within the main combustion chamber through at least one connecting port, the volume of the small secondary combustion chamber is kept substantially constant at its small volume so that the entire effect of the expansion of the gases during combustion is used to push back the engine piston of the main cylinder,
- in that fuel-free air is let into the main cylinder when the engine operates at low power and when the power stroke is then provided only by the expansion of the gases contained in the small secondary combustion chamber, whereas for operation at medium and high load, when the engine operates at greater power operated of a mixture of air and fuel is let into the main cylinder to be ignited by the "jet of flame" issuing from the secondary chamber.

2. Method for controlling combustion in a four-stroke engine according to Claim 1, during the combustion or expansion and exhaust strokes, characterized in that the volume of the small secondary combustion chamber is kept substantially constant at its small volume in order better to empty the small secondary combustion chamber during the exhaust stroke.

3. Method for controlling combustion in a four-stroke engine according to Claim 1 or 2, characterized in that during operation in light-load mode, when the main cylinder is supplied with air alone, during the induction and compression strokes, a valve that vents the main chamber to atmosphere is opened in order to avoid pumping effects on induction and back-pressures on the piston during the compression stroke.

4. Method for controlling combustion according to Claims 1 to 3, characterized in that the secondary chamber is fed with heterogenous air/fuel mixtures, like a diesel engine.

5. Method for controlling combustion according to Claims 1 to 3, characterized in that the main cylinder operates with heterogenous air/fuel mixtures, like a diesel engine, the start of combustion then being controlled by the opening of the connecting port, it being possible in this case for the secondary combustion chamber to be fed either with homogenous mixtures with controlled ignition, or according to Claim 4 with heterogenous mixtures like a diesel engine.

6. Device for implementing the method according to Claims 1 to 3 in an engine with rotary timing comprising, positioned on the assembly comprising liner and piston (2), (1), combustion chamber (7) and sealing ring (9), a rotary distributor (4) with a single lateral transfer port (5) which, as it rotates in turn, places the exhaust duct (6) in communication with the combustion chamber (7), then places the combustion chamber (7) in communication with the induction duct (8), characterized by the addition, in another transverse plane, of a small secondary combustion chamber (12) which opens into the rotary distributor (4), this communication being sealed by a sliding ring (12B) and which chamber is fed by an independent induction circuit, air duct (19), injector (21), throttle valve (20) with air/fuel mixture compressed by a piston (17) and in which chamber the air/fuel mixture is ignited by a spark plug (13) at the end of compression while, as it rotates, the rotary distributor (4) in which a connecting port (14) is formed will, not much before or substantially after the mixture has been ignited, establish a communication between the secondary combustion chamber (12) and the main combustion chamber (7) which in light-load operation is fed with air alone, and the air/fuel mixture ignited in the secondary chamber (12) will expand in the main combustion chamber (7) pushing back the piston (1) and thus providing the power stroke, the expansion of the gases contained in the secondary combustion chamber taking place in the main combustion chamber through the connecting port, whereas in medium/full-load operation, the main combustion chamber (7) is fed with air/fuel mixture and the "jet of flame" issuing from the secondary combustion chamber (12) through the connecting port (14) will in turn ignite the air/fuel mixture in the main chamber where the burning gases of the two chambers will expand, thus pushing back the piston and providing the power stroke.

7. Device according to Claim 6, characterized by a desmodromic dual-acting cam (18) control of the piston (17) compressing the air/fuel mixture in the secondary combustion chamber (12) where the top dead centre position of the said piston (17) will be maintained during the combustion, expansion and exhaust strokes in order, on the one hand, to avoid a needless drop in the pressure of the expanding gases so that all of the effect of the expansion will be used to push back the engine piston (1) of the main cylinder, and on the other hand best empty the secondary combustion chamber (12) through an orifice (16) produced for this purpose in the rotary distributor (4), the said cam (18) thereafter, during the induction stroke, allowing the piston (17) controlling the supply to the secondary chamber (12) to be brought to its bottom dead centre position to allow induction of the air/fuel mixture and then push this same piston (17) back towards top dead centre during the compression stroke in order to compress the air/fuel mixture in the secondary combustion chamber (12) where it will be ignited by the spark plug (13).

8. Device according to Claim 6, characterized by the use of an electronically controlled solenoid valve (15) allowing the main chamber (7) to be vented to atmosphere during light-load operation when the main cylinder feeding the main combustion chamber (7) is fed only with fuel-free air, during the induction strokes in order to avoid pumping effects and during the compression strokes in order to avoid back-pressures on the piston (1), the solenoid valve remaining closed once the main cylinder and the main combustion chamber (7) are fed with air/fuel mixture, in order to allow this cylinder to operate in the normal way.

9. Device according to Claim 6 where the secondary chamber (12) is fed with heterogenous air/fuel mixtures like in diesel engines, characterized by the fitting of a direct injector (22) as used in diesel engines into the secondary chamber.

10. Device according to Claim 6, where the main cylinder and the main combustion chamber (7) are fed with heterogenous mixtures like in diesel engines, characterized by the fitting of a direct injector (23) and of a pressurized fuel circuit like those used in diesel engines into the main chamber.

11. Device according to Claim 6, in an engine with valve timing comprising, positioned on the assembly comprising liner and piston (2), (1), a combustion chamber into which there open induction and exhaust ducts shut off by valves, characterized by a connecting or transfer port (24) situated at the top of this chamber which it connects to a small secondary combustion chamber (12) fed with air/fuel mixture compressed by a piston (17) and a secondary induction circuit consisting of an air duct, an injector and a throttle valve (19), (21), (20), the secondary piston (17) being controlled by a dual-acting cam (18), a shutter (25) being positioned in the transfer port (24) to establish and as it opens according to a cycle a communication between the small secondary combustion chamber (12) and the main combustion chamber (7), the cycles and the light-load or medium/ full-load operating modes being the same as those described in Claims 1 to 10.

12. Device according to Claim 11, characterized by the use of a rotary distributor (26) to allow the cyclic shutting off and opening of the transfer port (24) between the main combustion chamber (7) and the small secondary combustion chamber (12), the combustion chambers (7), (12) being sealed by sliding rings (9), (12B), and the rotary distributor, in which a transfer duct (27) is formed, being driven by the engine crankshaft either at one quarter of the speed of the crankshaft if the sealing rings are in the same transverse plane, the transfer duct (27) thus operating in both directions, or at half the crankshaft speed if the sealing rings are in a different transverse plane, the transfer duct (27) thus always operating in the same direction.
